# FASCICULE DE BREVET EUROPEEN

(11) **EP 2 900 981 B1**
(45) Date de publication et mention de la délivrance du brevet: **26.07.2017**
(21) Numéro de dépôt: 13782751.5
(22) Date de dépôt: 24.09.2013
(51) Int. Cl.: F02C 9/20, F01D 17/16, F01D 21/00

(54) **PROCEDE DE DIFFERENCIATION DE PANNES DE COMMANDE DANS UN SYSTEME DE COMMANDE D'UN ACTIONNEUR, NOTAMMENT DE STATOR DE MOTEUR A TURBINE A GAZ**
VERFAHREN ZUR DIFFERENZIERUNG VON STEUERUNGSFEHLERN IN EINEM STEUERUNGSSYSTEM FÜR EIN STELLGLIED, INSBESONDERE EINES STATORS EINER GASTURBINE
METHOD FOR DIFFERENTIATING CONTROL FAILURES IN A SYSTEM FOR CONTROLLING AN ACTUATOR, IN PARTICULAR OF A STATOR OF A GAS-TURBINE ENGINE

(30) Priorité: 26.09.2012 FR 1259038
(43) Date de publication de la demande: 05.08.2015
(73) Titulaire: Safran Aircraft Engines, 75015 Paris (FR)
(72) Inventeur: CHEVALIER, Séverine, F-77550 Moissy-Cramayel (FR); RODRIGUES, Jose, F-77550 Moissy-Cramayel (FR); TIEPEL, Alain, F-77550 Moissy-Cramayel (FR)
(74) Mandataire: Gevers & Orès
(86) Numéro de dépôt international: PCT/FR2013/052238
(87) Numéro de publication internationale: WO 2014/049260

(56) Documents cités:
- EP-A2- 1 988 258
- FR-A1- 2 963 948
- US-A- 5 938 401
- US-B1- 6 341 238

## Description

### Domaine de l'invention

La présente invention concerne le domaine des moteurs à turbine à gaz, plus particulièrement des moteurs équipant les aéronefs, et se rapporte à la détection des pannes dans un système de commande des organes de modification de l'état de fonctionnement du moteur, tel que le système régulant l'angle de calage des ailettes à calage variable de stator du compresseur.

### Etat de la technique

Dans un moteur équipant un aéronef, notamment militaire, on cherche généralement à gérer les défaillances du système de régulation de manière à permettre une meilleure tolérance aux pannes et réduire le taux d'annulation des missions.

Selon un mode connu de régulation, le contrôle du moteur est fondé sur une architecture de régulation à deux niveaux imbriqués. Celle-ci est composée de boucles de régulation moteur et de boucles de régulation locales : les premières assurent l'asservissement de l'état du moteur par exemple son régime de rotation ou la vitesse de sortie du compresseur BP ; les secondes assurent l'asservissement de position des actionneurs agissant sur les organes de modification de l'état du moteur que sont les doseurs de carburant, la roue directrice d'entrée, les ailettes de stator à calage variable, la tuyère ou autres.

Les boucles de régulation locales sont composées de trois parties : une partie calcul, une partie commande et une partie mesure. La partie calcul élabore la commande en courant électrique à appliquer aux actionneurs. Cette commande est élaborée de façon à assurer la convergence de la position réelle des actionneurs vers la position de consigne. La partie commande positionne l'organe de sortie de l'actionneur en fonction de la commande en courant. Enfin la partie mesure évalue la position de l'organe de sortie des actionneurs.

La partie calcul est uniquement électrique et la partie commande quant à elle comprend aussi des moyens mécaniques.

La partie électrique est redondée. Elle est généralement à double voie et comprend généralement deux calculateurs, chacun pouvant envoyer du courant électrique aux actionneurs. L'actionneur est toutefois commandé par un seul calculateur à la fois : le calculateur actif. L'autre calculateur - le calculateur passif - est prêt à prendre la main en cas de dysfonctionnement du premier. Il y a alors commutation de calculateur : le calculateur actif devient passif et inversement.

La partie mécanique quant à elle n'est pas redondée ; il n'y a qu'une seule voie de commande mécanique.

Parmi les pannes affectant le système de commande des boucles locales de régulation, on distingue les pannes par le degré d'importance de leur ampleur. Une panne simple correspond à une défaillance transparente ou temporaire de la chaine de commande, une panne double correspond à une défaillance définitive.

On distingue aussi les pannes d'origine électrique de celles qui sont d'origine mécanique car les actions de maintenance à mener en cas de simples pannes de commande de type électrique ne sont pas les mêmes que celles à mener en cas de simples pannes de commande de type mécanique. Les documents US-6341238-B1, US-5938401-A, EP-1988258-A2 et FR-2963948-A1, par exemple, présentent des systèmes de commandes d'un actionneur configurés pour identifier différents type de pannes. Mais, sur certains moteurs, le type de panne de commande n'est pas diagnostiqué par le système de régulation. Il y a alors des risques que les actions de maintenance ne soient pas adaptées.

Dans le cas d'une commande électrique à double voie, lorsqu'une panne simple de commande survient, elle entraîne la commutation de calculateur. La voie de commande électrique en panne devient passive. Ainsi la simple panne de commande est transparente en vol. Cependant pour des raisons de sécurité, les procédures de maintenance requièrent la dépose d'un équipement - Calculateur ou Bloc de commande concerné - au sol.

La légitimité de cette dépose varie selon l'origine de la simple panne de commande. Elle résulte soit de la défaillance de l'une des deux voies de commande électrique, soit d'une défaillance temporaire de la voie de commande mécanique. Cette dernière peut être, par exemple, une pollution passagère du fluide moteur de l'actionneur empêchant son fonctionnement.

Il apparaît que lorsque l'origine de la simple panne de commande est mécanique, la dépose n'est pas justifiée.

### Exposé de l'invention

La présente invention vise à améliorer la gestion des pannes dans les moteurs qui ne disposent pas de moyen de diagnostic du type de panne de commande simple. Elle porte ainsi sur l'élaboration d'un diagnostic du type de panne de commande d'une boucle de régulation locale, notamment de la boucle de régulation de l'angle de calage des ailettes de stator à calage variable. La finalité est d'aider à la détermination de l'action de maintenance en cas de simples pannes de commande.

C'est ainsi que l'invention porte sur un procédé de différenciation de pannes de commande dans un système de commande d'un actionneur, l'actionneur présentant un organe mobile agissant sur la position d'un organe de modification de l'état d'un moteur à turbine à gaz, le système comprenant une commande électrique et une commande mécanique, la commande électrique comprenant au moins un calculateur pour calculer la position de consigne de l'organe mobile de l'actionneur et transmettre un signal de consigne à la commande mécanique, monovoie, de l'actionneur, une panne étant diagnostiquée lorsqu'un écart est détecté entre la position de consigne de l'actionneur et sa position mesurée pendant une durée déterminée de confirmation de l'écart.

Le procédé est caractérisé par le fait que la vitesse de déplacement de l'actionneur est mesurée, et qu'une panne d'origine électrique est diagnostiquée lorsque, pendant ladite durée de confirmation de l'écart, la vitesse de déplacement mesurée reste nulle ou supérieure à une vitesse seuil prédéterminée, sinon la panne est d'origine mécanique temporaire.

Par le procédé de l'invention, on dispose d'un moyen de différenciation entre une panne électrique qui par sécurité et conformément aux procédures de maintenance, entraîne la dépose au sol d'un équipement et une panne mécanique temporaire qui objectivement ne nécessite pas de dépose. Il est ainsi possible de décider de ne pas procéder à la dépose de l'équipement concerné si le type de panne simple mécanique ne se répète pas. Si la panne d'origine mécanique se répète un certain nombre de fois, 3 par exemple, il peut être opportun de procéder à la dépose. Conformément à une autre caractéristique, si l'actionneur est en position de repli au moment où l'écart est détecté et reste dans cette position pendant la durée déterminée de confirmation de l'écart, le système est déclaré en panne d'origine électrique.

Cette condition est imposée par le fait que la panne électrique conduisant à un déplacement brutal vers la position de repli, il est possible que l'actionneur soit à sa position de repli avant la détection d'un écart. Dans ce cas la vitesse reste nulle pendant la phase de surveillance ce qui indiquerait de façon erronée une panne mécanique temporaire.

Conformément à une autre caractéristique, la valeur du signal de commande étant comparée à un seuil déterminé, si le signal est supérieur audit seuil, et la vitesse de déplacement est supérieure à la vitesse seuil, alors la panne de commande est déclarée électrique.

La présente invention concerne un système de commande utilisant une commande électrique simple voie ou double voie. Elle s'applique en particulier à la boucle locale de régulation de l'actionneur commandant l'angle de calage des ailettes à calage variable de stator du compresseur du moteur. Elle s'applique aussi à la boucle locale de commande de la roue directrice d'entrée d'air (RDE).

### Brève présentation des figures.

La figure 1 illustre l'architecture des boucles de régulation d'un moteur à turbine à gaz ;
La figure 2 est un diagramme bloc des différentes étapes opérées lors de la méthode de différenciation des pannes simples de commande de l'invention.

### Description détaillée d'un mode de réalisation de l'invention

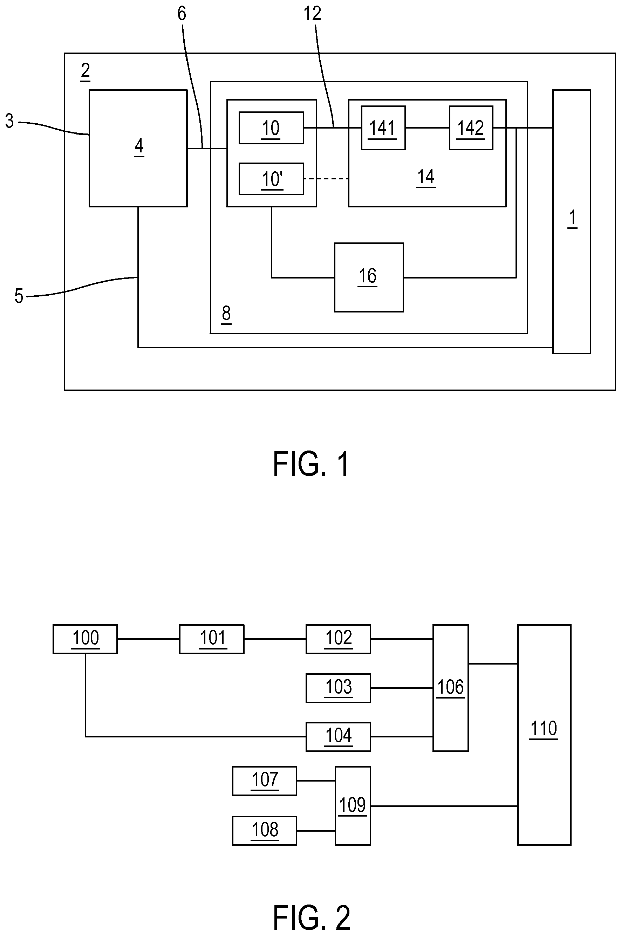

Le schéma de la figure 1 est relatif à l'architecture de régulation d'un moteur à turbine à gaz propulsant un aéronef. Ce moteur est par exemple à double corps avec deux rotors concentriques tournant à des vitesses différentes, un rotor à basse pression et un rotor à haute pression. Chaque rotor comprend, de part et d'autre de la chambre de combustion, un compresseur comprimant l'air vers la chambre de combustion et une turbine alimentée par les gaz de combustion de la chambre et entraînant le compresseur qui lui est associé. Le compresseur haute pression reçoit l'air du compresseur basse pression et la turbine basse pression reçoit les gaz partiellement détendus dans la turbine haute pression.

Le contrôle de ce moteur est fondé sur une architecture de régulation à deux niveaux imbriqués. Elle est composée de boucles de régulation moteur 2 qui assurent l'asservissement de l'état du moteur 1, notamment son régime de rotation des rotors et la vitesse de sortie du compresseur BP.

Les boucles moteurs 2 sont composées de trois parties, une partie calcul 4, une partie moteur 1, et une partie mesure 5 des paramètres du moteur.

La partie calcul 4 assure les fonctions suivantes :
Définition de l'état désiré du moteur 1 en fonction des paramètres d'entrée 3 qui sont les conditions de vol de l'aéronef et de la position manette des gaz ;
Calcul de l'état du moteur réel d'après les mesures fournies par la partie 5 de mesure des paramètres moteur ;
Calcul de la consigne 6 de position d'actionneur. Cette consigne est élaborée de façon à assurer la convergence de l'état du moteur mesuré vers l'état du moteur désiré.

La partie moteur 1 voit son état modifié par la position des actionneurs.

La partie mesure 5 évalue les paramètres de fonctionnement du moteur.

A l'intérieur des boucles moteurs, le système comprend des boucles de régulation locales 8 qui assurent l'asservissement de position des actionneurs. Ces actionneurs, vérins notamment, agissent sur les organes de modification de l'état du moteur que sont les doseurs de carburant principal, et de postcombustion (il s'agit de débit mètre et non de vérin pour la post combustion) le cas échéant, la roue directrice d'entrée d'air, les ailettes de stator à calage variable, la tuyère et autres.

La présente invention vise particulièrement la commande de l'angle de calage des ailettes à calage variable de stator. La variation du calage des ailettes de stator permet d'optimiser le fonctionnement du compresseur HP du moteur et d'augmenter sa marge au pompage.

Les boucles locales 8 sont composées :
d'une partie calcul 10 qui élabore la commande 12 en courant à appliquer aux actionneurs. La commande 12 est élaborée de façon à assurer la convergence de la position mesurée en 16 des actionneurs vers la position de consigne ;
d'une partie commande 14 qui positionne l'actionneur en fonction de la commande en courant ;
d'une partie mesure 16 qui évalue la position des actionneurs.

La chaine de commande 10, 14, 16 comporte deux parties :
- Une partie électrique 10. Cette partie transmet l'énergie électrique aux actionneurs.
- Une partie mécanique ou hydromécanique 14. Cette partie transforme l'énergie électrique en énergie mécanique. Pour un actionneur hydromécanique cette partie comprend une servovalve 141 qui commande l'alimentation de l'actionneur, tel qu'un vérin en fluide sous pression. Il est à noter que la servovalve comprend elle-même une partie électrique avec deux voies de commande redondées et une partie mécanique.

La partie électrique 10 peut être redondée. Elle comprend dans ce cas deux calculateur 10 et 10'. Chaque calculateur peut envoyer du courant 12 aux actionneurs, par exemple à la servovalve 141 d'un actionneur hydromécanique. Cependant, l'actionneur 14 est commandé par un seul calculateur à la fois : le calculateur actif 10. L'autre calculateur 10' est passif et reste prêt à prendre la main en cas de dysfonctionnement du premier. Il y a alors commutation de calculateur : le calculateur actif devient passif et inversement.

Il y a ainsi, en général, deux voies de commande électrique. Par contre, la partie mécanique n'est pas redondée. Il y a une seule voie de commande mécanique.

### Présentation des pannes de commande

Une panne de commande est due soit à une défaillance au niveau de l'une ou des deux voies de commande électrique 10, 10' ou 12 et aussi de la partie électrique de la servovalve 141 (bobines notamment), soit à une défaillance au niveau de la chaîne hydromécanique de 141, 142. On distingue ainsi les pannes d'origine électrique des pannes d'origine mécanique.

La voie de commande associée au calculateur actif est dite en panne lorsqu'il y a un écart supérieur à un seuil donné pendant une durée de confirmation donnée entre la réponse de l'asservissement et la réponse théorique. Cette durée de confirmation est évaluée à partir d'un modèle théorique de la chaîne de commande.

On distingue aussi les pannes selon leur degré d'importance : pannes simples et pannes doubles, voir plus haut.

Le degré d'importance de la panne (simple ou double) dépend de l'ampleur de la défaillance.

Pour les pannes d'origine électrique, l'ampleur de la défaillance est caractérisée par le nombre de voies électriques 10 ou 10' concernées. Dans le cas d'un système à double voie de commande électrique, la défaillance sur une seule voie de commande électrique entraîne une simple panne de commande. Une défaillance sur les deux voies 10 et 10' de commande électrique entraîne une double panne de commande. Dans le cas d'un système à une seule voie de commande électrique, il n'y a plus de notion de simple ou double panne. Une défaillance entraîne la détection d'une panne de commande.

Pour les pannes d'origine mécanique, Il n'y a qu'une seule voie de commande mécanique. L'ampleur de la défaillance mécanique varie selon la durée de la défaillance : défaillance définitive ou temporaire. La Table ci-dessous indique la correspondance entre la durée de la défaillance mécanique et la panne de commande qu'elle entraîne.

| Durée de la défaillance mécanique | Panne de commande associée | Dénomination de la défaillance mécanique |
|---|---|---|
| Courte | Pas de panne de commande | Défaillance transparente |
| Moyenne | Simple panne de commande | Défaillance temporaire |
| Importante | Double panne de commande | Défaillance définitive |

Une durée est dite courte si elle est inférieure à la durée de confirmation : confirmation de la panne sur le nouveau calculateur actif.

Une durée est dite moyenne si elle est comprise entre la durée de confirmation et la somme des durées suivantes : durée de confirmation + durée d'inhibition. Cette dernière est la durée pendant laquelle la surveillance de la panne est inhibée suite à une commutation de voie - cela permet de laisser du temps au nouveau calculateur actif de corriger le positionnement.

Une durée est dite importante si elle est supérieure à la somme des durées suivantes : durée de confirmation + durée d'inhibition.

### Impact des simples pannes de commande sur la disponibilité du moteur dans le cas d'une commande électrique double voie.

Une simple panne de commande entraîne la commutation de calculateur 10, 10'. La voie de commande en panne devient passive. La simple panne de commande est ainsi transparente en vol. Pourtant, conformément aux procédures de maintenance des moteurs selon l'art antérieur et pour des raisons de sécurité, cette panne entraîne la dépose systématique d'un équipement - calculateur 10, 10' ou bloc de commande 14 de l'actionneur concerné - au sol.

La légitimité de cette dépose varie selon l'origine de la simple panne de commande.

Les origines d'une simple panne de commande sont :
- Une défaillance d'une des deux voies de commande électrique
- Une défaillance temporaire de la voie de commande mécanique. Cela peut être, par exemple, une pollution passagère de l'actionneur.

Dans le cas d'une simple panne de commande d'origine mécanique, la dépose n'est pas justifiée.

La table ci-dessous présente les impacts en termes de disponibilité du moteur de la simple panne de commande.

| Origines de la simple panne de commande | Impacts |
|---|---|
| Défaillance d'une voie de commande électrique | Pas d'impact en vol Impact au sol : Dépose justifiée |
| Défaillance temporaire de la voie de commande mécanique | Pas d'impact en vol Impact au sol : Dépose potentiellement injustifiée |

### Nécessité de la différenciation des pannes de commande

L'analyse ci-dessus montre que de ne pas dissocier les origines des pannes simples de commande conduit à des déposes d'équipement qui ne sont pas justifiées. C'est pourtant la procédure de maintenance préconisée dans l'art antérieur par mesure de sécurité.

On a noté que, pendant une période d'observation de plusieurs mois, un pourcentage non négligeable des déposes du bloc stator (comprenant les ailettes à calage variable) suite à une simple panne de commande était injustifié. Une dépose est dite injustifiée si aucune défaillance n'a été remarquée lors d'investigations sur l'équipement déposé.

Il est à noter aussi qu'il serait possible de différencier les pannes de commande par l'implémentation d'une surveillance du courant de commande. Le courant envoyé vers la servovalve 141 est relu par le calculateur 10. Le courant de relecture est désigné dans le domaine courant de « wrap ». Ce courant est comparé à celui élaboré par le calculateur. Un écart entre ces deux courants indique une panne de commande d'origine électrique. Toutefois une telle solution se traduirait par une exigence sur le matériel et le système d'exploitation du calculateur et pour un moteur existant, cela supposerait une modification du calculateur. Pour éviter une telle modification la solution de l'invention, de mise en oeuvre simple dans ce cas, a été élaborée.

Afin d'éviter les déposes inopportunes en cas de panne temporaire d'une voie de commande mécanique, il est nécessaire de différencier les simples pannes de commande en fonction de leurs origines.

### Analyse des effets des pannes à distinguer

Pour une boucle locale comprenant un actionneur hydromécanique, la chaîne de commande d'une boucle de régulation locale est constituée du calculateur actif 10 ou 10' qui élabore le courant de commande 12 à envoyer à la servovalve 141. Ce courant est calculé de façon à faire tendre l'écart entre la position mesurée de l'actionneur 142 vers la position consigne élaborée par les boucles moteurs. La servovalve 141 assure l'alimentation en débit des chambres de l'actionneur. Les pressions d'alimentation dépendent du courant de commande 12 reçu par la servovalve 141. La vitesse de déplacement de l'organe mobile de l'actionneur est déterminée par le débit d'alimentation.

Le déplacement du vérin est proportionnel à la variation de courant de commande.

Au courant nul correspond un déplacement brutal, c'est-à-dire à la vitesse maximum associée aux conditions de vol données, de l'organe mobile de l'actionneur (vérin) vers la position de repli. Au courant maximum correspond un déplacement brutal, c'est à dire à la vitesse maximum associée aux conditions de vol données de l'organe mobile de l'actionneur (vérin) en direction opposée à la position de repli. Une servovalve à double étage est décrite dans le brevet US 3023782

### Effets des pannes d'une voie de commande électrique :

Les pannes d'une voie de commande électrique sont généralement dues soit à un circuit ouvert, soit à un court-circuit. Un court-circuit est détecté par le disjoncteur du calculateur, qui commande alors la mise à zéro du courant émis. Ces deux types de défaillance entraînent la mise à zéro du courant lue par la servovalve 141 qui commande alors le déplacement brutal du vérin vers sa position de repli.

Une panne de commande électrique peut aussi être due (5% des cas) à une dérive du courant envoyé par le calculateur. La dérive du courant envoyé par le calculateur entraîne un décalage de la réponse de la servovalve. Ce décalage est compensé par la boucle d'asservissement, mais entraîne tout de même une augmentation du temps de réponse de la boucle.

### Effets des pannes temporaires de la voie de commande mécanique :

Les défaillances temporaires de la voie de commande mécanique résultent d'un grippage du tiroir de la servovalve dans le cas d'une pollution passagère.

L'analyse montre qu'Il existe deux types de grippage de tiroir : coincement de particules entre le tiroir et la fourrure ou cisaillement de particules entre tiroir et sortie d'alimentation des chambres vérin. Le premier type a pour effet d'augmenter les frottements sur les tiroirs. La courbe courant/débit présente une hystérésis. Autrement dit, le temps de réponse de la chaine de commande est augmenté.

Une particule qui se coince entre le tiroir et une sortie d'alimentation d'une chambre du vérin sera cisaillée. Le tiroir est bloqué pendant le temps du cisaillement (ce qui peut prendre un temps assez long pour lever une panne de commande). La pression d'alimentation des chambres du vérin est maintenue constante pendant le blocage. Cela ne peut arriver qu'aux environs de la position d'équilibre du tiroir (fermeture de la sortie d'alimentation des chambres vérin), donc pour des vitesses faibles.

Les pannes temporaires de la voie de commande mécanique sont ainsi dues à une diminution momentanée des performances des actionneurs. Le temps de réponse de la boucle est augmenté.

L'analyse qui précède montre que la plupart des pannes d'une voie de commande électrique sont différenciables des pannes temporaires de la voie de commande mécanique par leur brutalité.

Un faible pourcentage (5%) des pannes de commande d'origine électrique présentent des effets similaires aux simples pannes de commande d'origine mécanique.

### Méthode de différenciation des simples pannes de commande de différentes origines

La méthode de l'invention repose sur la constatation qu'une panne électrique entraîne dans 95% des cas le déplacement du vérin à la vitesse maximum pour les conditions de vols données vers la position de repli, alors qu'une panne hydromécanique temporaire restreint le domaine de vitesse de déplacement du vérin.

Ainsi, la surveillance de la vitesse du vérin permet de distinguer une panne électrique et une panne hydromécanique temporaire.

La vitesse du vérin est surveillée au moment de la défaillance, c'est-à-dire depuis la détection d'un écart entre la réponse de l'asservissement et la réponse théorique, jusqu'à la confirmation de la panne de commande, juste avant la commutation de calculateur. Cela correspond à la phase de confirmation de panne de commande.

Une vitesse seuil est déterminée par calibration lors d'essais sur moteur. Elle est déterminée de façon à être inférieure à la vitesse associée à une panne de commande électrique de type circuit ouvert ou court circuit. Elle est évaluée par mise à zéro du courant envoyé à la servovalve de l'actionneur.

Si le vérin se déplace dans le sens de la position de repli et que la vitesse du vérin est supérieure à la vitesse seuil pendant la phase de confirmation de panne de commande, alors la panne est dite d'origine électrique. Sinon, la panne est dite d'origine mécanique.

### Cas particuliers à prendre en compte :

### Condition sur la position

Une panne électrique entraîne un déplacement brutal vers la position de repli. Il est possible que le vérin atteigne la position de repli avant la détection d'un écart entre la réponse de l'asservissement et la réponse théorique. Dans ce cas là, la vitesse reste nulle pendant la phase de surveillance. Il est donc nécessaire d'ajouter la condition suivante : Si le vérin est en position de repli pendant la phase de confirmation de panne de commande, alors la panne est dite d'origine électrique.

### Condition sur le courant

Dans le cas où le courant de commande calculé est nul, une panne de commande mécanique peut entraîner un déplacement dans le sens de la position de repli et que la vitesse du vérin est supérieure à la vitesse seuil pendant la phase de confirmation de panne de commande. Afin de ne pas se méprendre sur l'origine de ces pannes de commande mécanique, il est nécessaire d'ajouter une condition sur le courant.

Dans le cas de panne de commande électrique, il y a incohérence entre le courant de commande calculée et le courant de commande effectivement reçu par la servovalve. Le courant de commande calculé est déterminé pour ralentir le vérin voire inverser son sens de déplacement. Le courant de commande calculé n'est pas proche de 0 dans le cas de panne de commande électrique.

La panne de commande est dite électrique si le déplacement du vérin est brutal alors que le courant de commande n'est pas faible.

Grâce à une différenciation de pannes de commande, la logique de dépose suite à une simple panne de commande peut être modifiée. Les écarts sont indiqués dans la Table ci-dessous.

Remarque : Une répétition de simples pannes de commande au cours d'un vol indique une situation anormale. Une dépose est considérée comme nécessaire dans ce cas là. Le seuil de répétition est fixé à 3.

| Origine diagnostiquée de la simple panne de commande | Nombre de simples pannes durant le vol | Logique de maintenance avec différenciation des pannes de commande |
|---|---|---|
| Origine électrique | Indifférent | Dépose |
| Origine temporaire mécanique | <3 | Pas de dépose |
| | >3 | Dépose |

Il est à noter également que cette différenciation entre pannes de commande électrique et pannes de commande mécanique permet de supprimer des tests aux sol du matériel déposé, que le système soit simple ou double voie de commande électrique.

La figure 2 représente un schéma logique des différentes opérations. Les références désignent ainsi les opérations suivantes :
100 : la position X de l'organe mobile de l'actionneur est mesurée ;
101 : la vitesse V de l'organe mobile est élaborée à partir de la position ;
102 : la vitesse V est comparée à la vitesse seuil ;
103 : le courant de commande est comparé au seuil de faible courant de commande ;
104 : la position de l'organe mobile de l'actionneur est comparée à une position donnée de butée ;
106 : une indication de différentiation est élaborée à partir des résultats de 102, 103 et 104 surveillés pendant une durée correspondant à la phase de confirmation d'une panne de commande de l'actionneur ;
107 : vérification de l'absence de panne du capteur de la position de l'organe mobile de l'actionneur ;
108 : vérification de la détection de panne de commande ;
109 : vérification que les deux conditions sont remplies ;
110 : l'indication de différenciation est prise en compte seulement dans le cas de détection de panne de commande.

## Revendications

1. Procédé de différenciation de pannes de commande dans un système de commande d'un actionneur (14) agissant sur la position d'un organe de modification de l'état d'un moteur à turbine à gaz, le système comprenant une commande électrique et une commande mécanique, la commande électrique comprenant au moins un calculateur (10, 10') pour calculer la position de consigne de l'organe mobile de l'actionneur (14) et transmettre un signal de consigne à la commande mécanique, monovoie, de l'actionneur, une panne étant diagnostiquée lorsqu'un écart est détecté entre la position de consigne de l'organe mobile de l'actionneur et sa position mesurée pendant une durée déterminée de confirmation de l'écart, **caractérisé par le fait que** la vitesse de déplacement de l'actionneur est mesurée et qu'une panne d'origine électrique est diagnostiquée lorsque, pendant ladite durée de confirmation de l'écart, la vitesse de déplacement mesurée reste nulle ou supérieure à une vitesse seuil prédéterminée, sinon la panne est d'origine mécanique temporaire.

2. Procédé selon la revendication 1 selon lequel, si l'actionneur est en position de repli au moment où l'écart est détecté et reste dans cette position pendant la durée déterminée de confirmation de l'écart, le système est diagnostiqué en panne d'origine électrique.

3. Procédé selon l'une des revendications 1 et 2, la valeur du signal de commande étant comparée à un seuil déterminé, si le signal est supérieur audit seuil, et la vitesse de déplacement est supérieure à la vitesse seuil, alors la panne de commande est diagnostiquée comme étant électrique.

4. Procédé selon l'une des revendications 1 à 3, l'actionneur commandant la position des ailettes de stator du compresseur du moteur.

5. Système de commande d'un actionneur (14) agissant sur la position d'un organe de modification de l'état d'un moteur à turbine à gaz, le système comprenant une commande électrique et une commande mécanique, la commande électrique comprenant au moins un calculateur (10, 10'), un seul étant actif à la fois agencé pour calculer la position de consigne de l'organe mobile de l'actionneur (14) et transmettre un signal de consigne à la commande mécanique, monovoie, de l'actionneur, ledit système comprenant en outre un moyen (16) pour mesurer la position de l'organe mobile de l'actionneur et un moyen (10, 10') pour diagnostiquer une panne lorsqu'un écart est détecté entre la position de consigne de l'organe mobile de l'actionneur et sa position mesurée pendant une durée déterminée de confirmation de l'écart, **caractérisé par le fait qu'**il comporte un indicateur de différenciation de pannes de commande de l'actionneur, le système comprenant un moyen pour mesurer la vitesse de déplacement de l'organe mobile de l'actionneur, un moyen pour comparer la vitesse à une vitesse et un moyen indicateur de différenciation de panne tel que le système diagnostique une panne d'origine électrique lorsque, pendant ladite durée de confirmation de l'écart, la vitesse de déplacement mesurée reste nulle ou supérieure à une vitesse seuil prédéterminée, sinon la panne est dite d'origine mécanique temporaire.

6. Système selon la revendication précédente comprenant une commande électrique à double voie avec un calculateur (10, 10') par voie, un seul étant actif à la fois.

## Patentansprüche

1. Verfahren zur Differenzierung von Steuerungsfehlern in einem Steuersystem eines Aktuators (14), der auf die Position eines Änderungsorgans des Zustands eines Gasturbinentriebwerks einwirkt, wobei das System eine elektrische Steuerung und eine mechanische Steuerung aufweist, wobei die elektrische Steuerung mindesten einen Rechner (10, 10') aufweist, um die Sollposition des beweglichen Organs des Aktuators (14) zu berechnen und ein Sollwertsignal an die mechanische Einkanal-Steuerung des Aktuators zu übertragen, wobei ein Fehler diagnostiziert wird, wenn eine Abweichung zwischen der Sollposition des beweglichen Organs des Aktuators und seiner Position, die während einer vorbestimmten Zeitdauer der Bestätigung der Abweichung gemessen wird, festgestellt wird, **dadurch gekennzeichnet, dass** die Bewegungsgeschwindigkeit des Aktuators gemessen wird und, dass ein Fehler elektrischen Ursprungs diagnostiziert wird, wenn die gemessene Bewegungsgeschwindigkeit während der Zeitdauer der Bestätigung der Abweichung Null oder höher als eine vorbestimmte Schwellengeschwindigkeit bleibt, ansonsten ist der Fehler vorübergehenden mechanischen Ursprungs.

2. Verfahren nach Anspruch 1, wobei, wenn der Aktuator zum Zeitpunkt, zu dem die Abweichung festgestellt wird, in rückgezogener Position ist und während der vorbestimmten Zeitdauer der Bestätigung der Abweichung in dieser Position bleibt, bei dem System ein Fehler elektrischen Ursprungs diagnostiziert wird.

3. Verfahren nach einem der Ansprüche 1 und 2, wobei, nachdem der Wert des Steuersignals mit einem vorbestimmten Schwellenwert verglichen wird, wenn das Signal größer als der Schwellenwert ist und die Bewegungsgeschwindigkeit höher als die Schwellengeschwindigkeit ist, der Steuerungsfehler folglich als elektrisch diagnostiziert wird.

4. Verfahren nach einem der Ansprüche 1 bis 3, wobei der Aktuator die Position der Leitschaufeln des Verdichters des Triebwerks steuert.

5. Steuersystem eines Aktuators (14), der auf die Position eines Änderungsorgans des Zustands eines Gasturbinentriebwerks einwirkt, wobei das System eine elektrische Steuerung und eine mechanische Steuerung aufweist, wobei die elektrische Steuerung mindesten einen Rechner (10, 10') aufweist, wobei jeweils ein einziger aktiv ist, der ausgelegt ist, um die Sollposition des beweglichen Organs des Aktuators (14) zu berechnen und ein Sollwertsignal an die mechanische Einkanal-Steuerung des Aktuators zu übertragen, wobei das System ferner ein Mittel (16) zum Messen der Position des beweglichen Organs des Aktuators und ein Mittel (10, 10') zum diagnostizieren eines Fehlers aufweist, wenn eine Abweichung zwischen der Sollposition des beweglichen Organs des Aktuators und seiner Position, die während einer vorbestimmten Zeitdauer der Bestätigung der Abweichung gemessen wird, festgestellt wird, **dadurch gekennzeichnet, dass** es einen Anzeiger der Differenzierung von Steuerungsfehlern des Aktuators aufweist, wobei das System ein Mittel, um die Bewegungsgeschwindigkeit des beweglichen Organs des Aktuators zu messen, ein Mittel, um die Geschwindigkeit mit einer Geschwindigkeit zu vergleichen, und ein Anzeigemittel der Fehlerdifferenzierung derart aufweist, dass das System einen Fehler elektrischen Ursprungs diagnostiziert, wenn die gemessene Bewegungsgeschwindigkeit während der Zeitdauer der Bestätigung der Abweichung Null oder höher als eine vorbestimmte Schwellengeschwindigkeit bleibt, ansonsten ist der Fehler vorübergehenden mechanischen Ursprungs.

6. System nach dem vorhergehenden Anspruch, umfassend eine elektrische Zweikanalsteuerung mit einem Rechner (10, 10') pro Kanal, wobei jeweils nur einer aktiv ist.

## Claims

1. Method for differentiating control faults in a system controlling an actuator (14) acting on the position of a member modifying the state of a gas turbine engine, the system comprising an electrical control and a mechanical control, the electrical control comprising at least one computer (10, 10') for calculating the desired position of the movable member of the actuator (14) and transmitting an instruction signal to the single-channel mechanical control of the actuator, a fault being diagnosed when a difference is detected between the desired position of the movable member of the actuator and its measured position for a given difference-confirmation period, **characterised by** the fact that the speed of movement of the actuator is measured and a fault of electrical origin is diagnosed when, during said difference-confirmation period, the speed of movement measured remains zero or above a predetermined threshold speed, otherwise the fault is of temporary mechanical origin.

2. Method according to claim 1, according to which, if the actuator is in the retracted position at the moment when the difference is detected and remains in this position for the given difference-conformation period, the system is diagnosed as having a fault of electrical origin.

3. Method according to either claim 1 or claim 2, the value of the control signal being compared with a given threshold, if the signal is above said threshold and the speed of movement is higher than the threshold speed, then the control fault is diagnosed as being electrical.

4. Method according to any of claims 1 to 3, the actuator controlling the position of the stator fins of the engine compressor.

5. System for controlling an actuator (14) acting on the position of a member modifying the state of a gas turbine engine, the system comprising an electrical control and a mechanical control, the electrical control comprising at least one computer (10, 10'), only one being active at a time, arranged to compute the desired position of the movable member of the actuator (14) and to transmit an instruction signal to the single-channel mechanical control of the actuator, said system further comprising a means (16) for measuring the position of the movable member of the actuator and a means (10, 10') for diagnosing a fault when a difference is detected between the desired position of the movable member of the actuator and its measured position for a given difference-confirmation period, **characterised by** the fact that it comprises an indicator differentiating control faults of the actuator, the system comprising a means for measuring the speed of movement of the movable member of the actuator, and a means for comparing the speed with a speed and a fault differentiation and indicating means such that the system diagnoses a fault of electrical origin when, during said difference-confirmation period, the measured speed of movement remains zero or higher than a predetermined threshold speed, otherwise the fault is said to be of temporary mechanical origin.

6. System according to the preceding claim, comprising a double-channel electrical control with one computer per channel, only one being active at a time.
